# EUROPEAN PATENT APPLICATION

(11) **EP 4 819 281 A1**
(43) Date of publication of application: **07.10.2026**
(21) Application number: 26169782.5
(22) Date of filing: 31.03.2026
(51) Int. Cl.: H01M 10/0565, H01M 10/058, H01M 10/6555, H01M 10/6568, H01M 10/658, H01M 50/209, H01M 50/291, H01M 50/293, H01M 10/613, H01M 50/249, H01M 10/625, H01M 10/052

(54) **BATTERY PACK FOR AN ELECTRIC PROPULSION ROAD VEHICLE AND METHOD FOR COOLING AN ELECTROCHEMICAL CELL OF SUCH BATTERY PACK**

(30) Priority: 01.04.2025 IT 202500006912
(71) Applicant: FERRARI S.p.A., 41100 Modena (IT)
(72) Inventor: SACERDOTI, Giorgia, 41100 MODENA (IT); TASSINARI, Matteo, 41100 MODENA (IT)
(74) Representative: Studio Torta S.p.A.

(57) **Abstract**

A battery pack (6) for an electric road vehicle (1), comprising: a casing (10); at least one electrochemical cell (11, 12) comprising, in turn, a cathode, an anode and a solid electrolyte electrically connected to the cathode and anode; the cell (11, 12) has a thickness (L) along a first axis (X) increasing, in use, following the activation of said first cell (11, 12) itself; the first cell (11, 12) is accommodated inside said casing (10); the battery pack (6) comprises a layer (46) of spongy material in contact with the first cell (11, 12) and adapted to permit, in use, the increase in the first thickness (L) along said first axis (X) of said first cell (11, 12); the battery pack (6) comprises a circuit (55), through which a heat transfer fluid can flow, which is adapted to cool the first cell (11, 12); the layer (46) defining at least one first branch (65) of the circuit (55).

## Description

### CROSS-REFERENCE TO RELATED APPLICATIONS

This patent application claims priority from Italian patent application no. 102025000006912 filed on April 1st, 2025, the entire disclosure of which is incorporated herein by reference.

### TECHNICAL FIELD

The present invention relates to a battery pack for an electric road vehicle.

The present invention also relates to a method for cooling an electrochemical cell for such a battery pack.

### BACKGROUND

The term 'electric road vehicle' is used in this description and in the claims both to describe road vehicles with only electric propulsion and to describe road vehicles with hybrid electric and endothermic propulsion equipped with at least one battery pack capable of providing electric power.

The battery pack comprises, in a known way, a plurality of electrochemical cells interconnected with each other in series and parallel in order to achieve the desired total voltage and energy density.

Each cell comprises, in a nutshell, a positive electrode commonly referred to as the cathode, a negative electrode commonly referred to as the anode, and a chemical substance commonly referred to as the electrolyte in which the positive and negative electrodes are immersed.

Cells with solid-state electrolyte and cells with a lithium metal anode are also known to be used in order to achieve a high energy density ideal for the implementation of electrics in the automotive sector.

Each cell is also less thick than its length and width.

Solid electrolyte cells present an unavoidable increase in thickness during operation as a result of the electrochemical reaction which takes place.

It is also necessary to ensure that the solid electrolyte remains in constant contact with the electrodes by exerting pressure and thus force on the cell from outside the cell itself.

In order to meet these requirements, battery packs with a modular design, proceeding along the thickness, are known.

In more detail, the battery pack comprises a casing and a plurality of modules interposed along the thickness between a pair of compression plates preferably made of Teflon. The compression plates are designed to generate a certain compression force on the cells. This compression force is necessary for the proper operation of the cells.

Known battery packs further comprise:
- a plurality of spongy elements interposed between two consecutive cells proceeding along the thickness and adapted to allow moderate expansion of the cells while preserving their compressive strength; and
- a cooling structure adapted to remove the heat that the cells generate during their operation.

In more detail, the cooling structure comprises, in turn:
- a plurality of cooling fins, preferably made as aluminium foils, passing through respective cells, and fastened to a lower wall of the casing; and
- a plate traversed by a heat transfer liquid and fastened to the lower wall of the casing in order to remove heat.

Under operating conditions, the cells exhibit a temperature gradient, with lower values at respective lower ends fixed to the lower part of the casing and higher values at respective upper ends opposite the corresponding lower ends.

This results in sub-optimal cooling of the cells themselves.

There is a need in the industry to increase the cooling efficiency of the battery pack cells, while reducing the weight, bulk and complexity of construction and increasing the electrical power generated by the battery pack itself.

### SUMMARY

The aim of the present invention is to provide a battery pack for an electric road vehicle, which enables at least one of the above-mentioned requirements to be fulfilled simply and economically.

The aforementioned aim is achieved by the present invention, in that it relates to a battery pack for an electric or hybrid road vehicle as defined in claim 1.

The present invention relates to a cooling method for an electrochemical cell for a battery pack of a road vehicle as defined in claim 8.

### BRIEF DESCRIPTION OF THE DRAWINGS

For a better understanding of the present invention, two embodiments are described below, by way of non-limiting example only and with reference to the accompanying drawings, wherein:
- Figure 1 is a perspective view of a motor vehicle with a battery pack made according to the dictates of one of the present invention and only schematically illustrated;
- Figure 2 is a greatly enlarged scale perspective view of a module of the battery pack in Figure 1, with parts removed for clarity;
- Figure 3 is a section along line III-III of Figure 2; and
- Figure 4 is an exploded perspective view of the battery pack in Figures 2 and 3.

### DESCRIPTION OF EMBODIMENTS

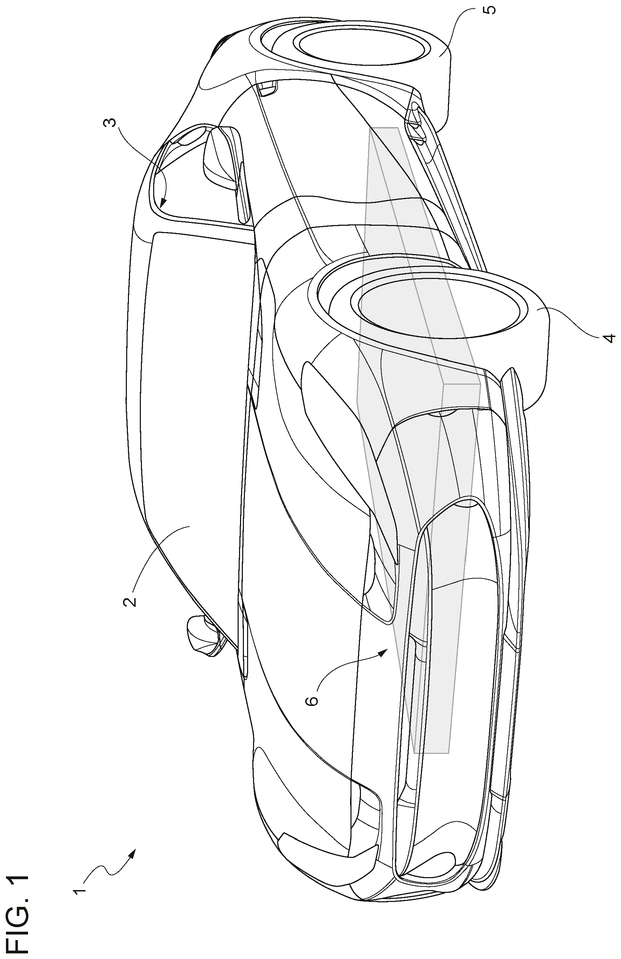

With reference to Figure 1, a road vehicle is denoted by 1 as a whole.

The road vehicle 1 is a vehicle with at least partly electric propulsion.

The term 'vehicle with at least partly electric propulsion' is understood in this description to mean either a road vehicle with only electric propulsion commonly known as a BEV ('Battery Electric Vehicle') or a road vehicle with hybrid electric and endothermic propulsion equipped with at least one battery pack capable of providing electric power.

It should be specified that in the remainder of the present description, expressions such as "upper", "lower", "front", "rear", "left", "right" and the like are used with reference to normal travel conditions of the motor vehicle 1.

In more detail, the vehicle 1 essentially comprises:
- a body 2 defining a passenger compartment 3;
- a pair of front wheels 4 and rear wheels 5; and
- a battery pack 6.

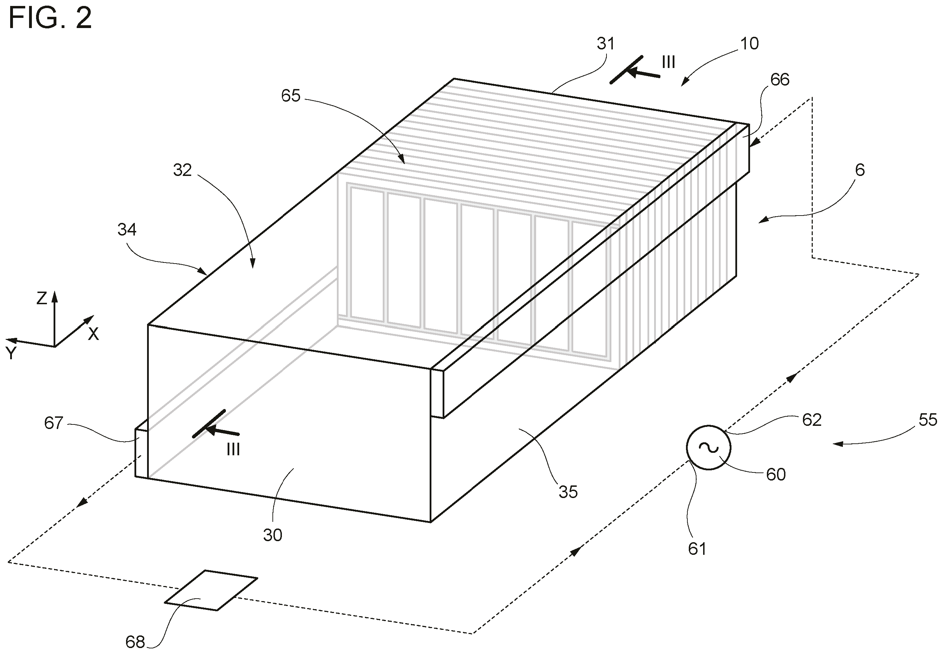

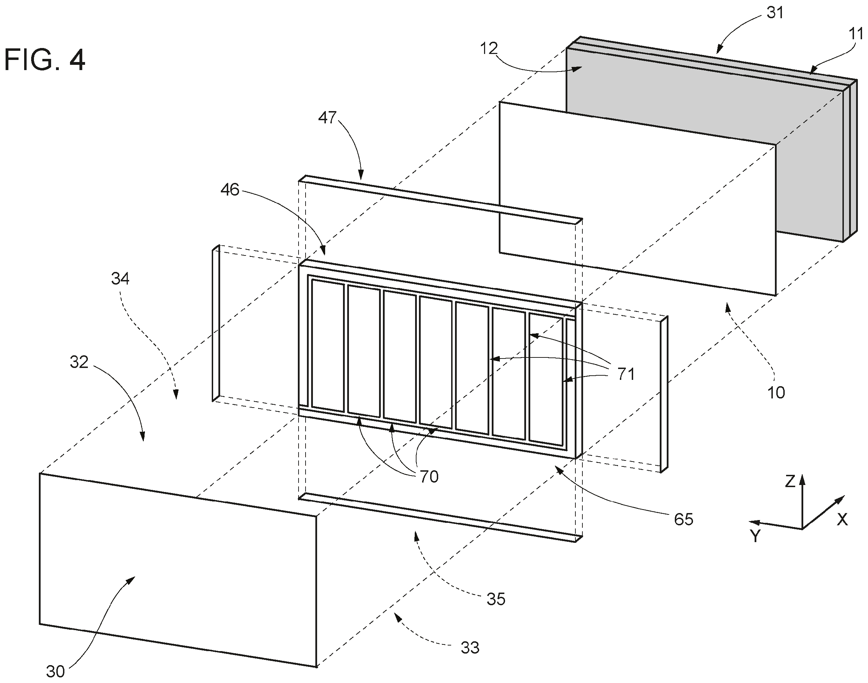

With reference to Figures 2 to 4, the battery pack 6 essentially comprises:
- a casing 10; and
- a plurality of cells 11, 12 accommodated inside the casing 10 and interconnected with each other in series and parallel to achieve the desired total voltage and energy density.

In particular, the cells 11, 12 are flanked by each other parallel to an axis X.

Each cell 11, 12 comprises, in a nutshell and in a known way, a positive electrode commonly referred to as the cathode, a negative electrode commonly referred to as the anode, and a chemical substance commonly referred to as the electrolyte in which the positive and negative electrodes are immersed.

In more detail, the casing 10 is shaped like a parallelepiped.

The casing 10 has a length along an axis Y orthogonal to the axis X, a length along an axis Y orthogonal to the axis X and a height along an axis Z orthogonal to the axes Z, Y.

In particular, the height of the casing 10 is less than the length and width of the casing 10 itself.

Each cell 11, 12 is, in the case illustrated, of the pouch type and prismatic in shape.

Similarly, each cell 11, 12 has a length along the axis Y, a thickness L along the axis X and a height along the axis Z.

In particular, the thickness L of each cell 11, 12 along the axis X is less than the length and height of the same cell 11 along the respective axes Y, Z. The casing 10 is delimited by (Figures 2 to 4):
- a pair of walls 30, 31 opposite each other along the axis X and lying on respective planes orthogonal to the axis X;
- a pair of walls 32, 33 opposite each other along the axis Z, lying on respective planes orthogonal to the axis Z, and interposed along the axis Z between walls 30, 31; and
- a pair of walls 34, 35 opposite each other along the axis Y, lying on respective planes orthogonal to the axis Y and interposed along the axis Y between walls 30, 31 and along the axis X between walls 32, 33.

As a result of the electrochemical reaction which has taken place, the thickness L of the cells 11, 12 parallel to the axis X increases during operation from a first value taken at the beginning of the service life of the cells 11, 12 to a second value taken at the end of the service life of the cells 11, 12.

The walls 30,31 are adapted to provide a level of compression on the cells 11, 12 necessary to ensure that the solid electrolyte remains in contact with the anode and cathode.

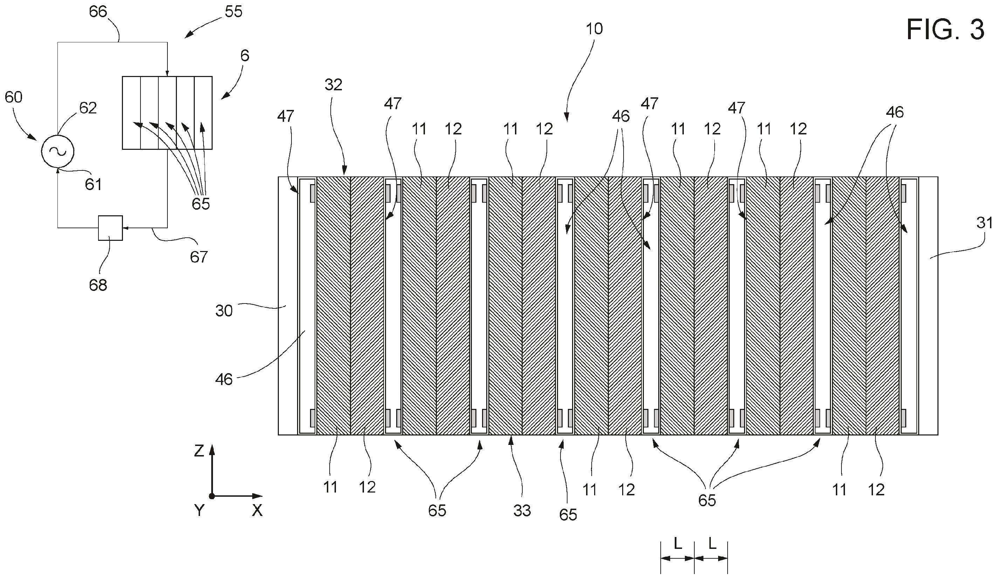

With reference to Figures 2 and 3, the battery pack further comprises a plurality of layers 46 interposed along the axis X between two consecutive cells 11, 12 along the axis X itself, and adapted to allow a slight expansion of the cells 11, 12, while preserving the compression layer generated by the walls 30,31.

In more detail, the walls 30, 31 are opposite each other along the axis X and are arranged in contact against respective layers 46.

Preferably, the walls 30, 31 are made of Teflon.

The layers 46 are preferably made of a spongy material, preferably a polymer material.

The walls 30, 31 and layers 46 lie on respective planes orthogonal to the axis X.

The walls 30,31 and layers 46 each have a respective height parallel to the axis Z and a respective length parallel to the axis Y.

Advantageously, the battery pack 6 further comprises a circuit 55 (only schematically illustrated in Figures 2 and 3) for adduction of a heat transfer fluid for cooling the cells 11, 12; the circuit 55 comprises a plurality of branches 65 accommodated inside respective layers 46.

In more detail, the circuit 55 comprises (Figures 2 and 3) :
- a pump 60 with a suction mouth 61 and a delivery mouth 62;
- a branch 66 fluidily connected to the delivery mouth 62 and branches 65, and crossed by the heat transfer fluid at a first temperature value;
- a branch 67 fluidily connected to the suction mouth 61 and branches 65 and crossed by the heat transfer fluid at the second temperature value; and
- a heat exchanger 68 crossed by the branch 67 to cool the heat transfer fluid from the second temperature value to the first temperature value.

In more detail, the activation of the pump 60 causes the heat transfer fluid (in the direction shown in Figures 2 and 3) to advance from the delivery mouth 62 along the branch 66, branches 65 at which heat is removed from the cells 11, 12, and the branch 67 through the heat exchanger 68 to the suction mouth 61 of the pump 60.

More precisely, each branch 65 comprises, in turn, a plurality of ducts 70, 71. At least the duct 70 extends parallel to the axis Y and at least the duct 71 extends parallel to the axis Z. More specifically, the duct 70 of each branch 65 extends parallel to the axis Y for the entire length of the respective layer 46 and the duct 71 of each branch 65 extends parallel to the axis Z for the entire height of the respective layer 46.

Each layer 46 is, moreover, wrapped by a respective membrane 47 made of an impermeable material that prevents the heat transfer fluid from flowing to the cells 11, 12. The impermeable material has high thermal conductivity to allow heat to pass from the cells 11, 12 to the fluid crossing the layers 46, and low electrical conductivity to reduce the likelihood of short circuits.

In use, the electrically connected cells 11, 12 generate the required voltage and energy density for the battery pack 6 through an electrochemical reaction taking place in the respective anode and cathode.

During operation of the cells 11, 12, the walls 30, 31 exert a certain level of uniform pressure on the cells 11, 12.

This maintains constant contact between the electrolyte and the respective anode and cathode.

The operation of the cells 11, 12 results in an increase in the thickness L along the axis X and in the temperatures of the cells 11, 12.

The layers 46 compensate for this increase in thickness.

The pump 60 causes a continuous circulation of the heat transfer fluid within the circuit 55 in order to cool the cells 11, 12.

More precisely, the activation of the pump 60 causes the advancement of the heat transfer fluid from the delivery mouth 62 along the branch 66, the branches 65 arranged within respective layers 46 and the branch 67.

The heat transfer fluid flows at the first temperature value along the branch 66, removes heat from the cells 11, 12 11 along the branches 65 arranged within corresponding layers 46.

In addition, the heat transfer fluid flows at the second temperature value along the branch 67 upstream of the heat exchanger 68 and at the first temperature value along the branch 67 downstream of the heat exchanger 68, and subsequently reaches the suction mouth 61 of the pump 60.

The heat transfer fluid flows, in particular, along the ducts 70 parallel to the axis Y and the ducts 71 parallel to the axis Z of corresponding branches 65, so as to remove heat from the portions of the cells 11, 12 adjacent to the wall 32.

The circulation of the heat transfer fluid thus enables the battery pack 6 to withstand uncontrolled temperature increases and the resulting thermal shocks.

The membranes 47 prevent the heat transfer fluid from flowing from the respective layers 46 to the cells 11, 12.

From an examination of the battery pack 6 and the cooling method implemented according to the present invention, its advantages are evident.

In particular, the heat transfer fluid adduction circuit 55 comprises a plurality of accommodated branches 65 of respective layers 46.

It is thus possible to efficiently remove heat from the entire cells 11, 12, as the relevant branches 65 extend the entire height of the cells 11, 12 parallel to the axis Z and the entire length of the cells 11, 12 themselves parallel to the axis Y.

In this way, greater temperature uniformity can be achieved within the cells 11, 12.

The battery pack 6 does not comprise any cooling fins or cooling plates, unlike the known type solutions commented on in the introductory part of this description.

Thus, it is possible to achieve a reduction in weight and bulk, and less assembly complexity than the above-mentioned known solutions.

It is also possible to increase the extractable power for the same weight from the battery pack 6.

Each layer 46 is wrapped in the respective membrane 47 made of impermeable material.

The membrane 47 prevents the heat transfer fluid from flowing to the cells 11, 12.

It is finally clear that modifications and variations may be made to the battery pack 6 and method described and shown herein, without departing from the scope of protection defined by the claims.

In particular, the ducts 70, 71 of the branches 65 could be shaped differently.

## Claims

1. A battery pack (6) for an electric road vehicle (1), comprising:
- a casing (10);
- at least one electrochemical cell (11, 12) comprising, in turn, a cathode, an anode and a solid electrolyte electrically connected to said cathode and anode; said cell (11, 12) having a thickness (L) along a first axis (X) increasing, in use, following the activation of said first cell (11, 12); said first cell (11, 12) being accommodated inside said casing (10);
- at least one layer (46) of spongy material in contact with said first cell (11, 12) and designed to permit, in use, an increase in said first thickness (L) along said first axis (X) of said first cell (11, 12);
**characterized in that** it comprises a circuit (55), through which a heat transfer fluid can flow, which is designed to cool said first cell (11, 12);
said layer (46) defining at least one first branch (65) of said circuit (55).

2. The battery pack according to claim 1, **characterized in that** said circuit (55) comprises, in turn:
- a second inlet branch (66), which is fluidly connected to said first branch (65) and through which said heat transfer fluid flows at a first temperature value; and
- a third outlet branch (67), which is fluidly connected to said first branch (65) and through which said heat transfer fluid at least partly flows at a second temperature value, which is higher than said first temperature value;
said second inlet branch (66) and said third outlet branch (67) extending parallel to said first axis (X) and being opposite one another parallel to a second axis (Y) transverse to said first axis (X).

3. The battery pack according to claim 2, **characterized in that** said first branch (65) comprises at least one first duct (70) parallel to said second axis (Y) and a second duct (71) parallel to a third axis (Z), which is orthogonal to said first axis (X) and to said second axis (Y).

4. The battery pack according to any one of the preceding claims, **characterized in that** said circuit (55) further comprises:
- a pump (60) comprising a delivery mouth (62) fluidly connected to said first branch (66) and a suction mouth (61) fluidly connected to said second branch (67); and
- a heat exchanger (68) fluidly interposed along said second branch (67), which can be supplied with said heat transfer fluid and designed to cool said fluid from said second temperature to said first temperature.

5. The battery pack according to any one of the preceding claims, **characterized in that** it comprises a plurality of said cells (11, 12) and layers (46) alternated with one another along said first axis (X).

6. The battery pack according to any one of the preceding claims, **characterized in that** it comprises at least one first membrane (47), which is made of an impermeable material and wraps said first layer (46).

7. An electric or hybrid road vehicle (1), comprising a battery pack according to any one of the preceding claims.

8. A method for cooling an electrochemical cell (11, 12) for a battery pack (6) for an electric or hybrid road vehicle (1);
- said cell (11, 12) comprising, in turn, a cathode, an anode and a solid electrolyte electrically connected to said cathode and anode and being accommodated in a casing (10);
said method comprising the steps of:
i) activating said cell (11, 12) so as to determine an increase in said thickness (L) of the cell (11, 12) along said axis (X); and
ii) placing a layer (46) of spongy material in contact with said first cell (11, 12) so as to permit an increase in said first thickness (L) along said axis (X) of said cell (11, 12);
**characterized in that** it comprises the step iii) of cooling said cell (11, 12) by means of a heat transfer fluid conveyed inside a circuit (55) having a first branch (65) defined by said first layer (46).

9. The method according to claim 8, **characterized in that** said step iii) comprises the steps of:
iv) conveying said heat transfer fluid at a first temperature value along a second inlet branch (66), which is fluidly connected to said first branch (65); and
v) conveying said heat transfer fluid at a second temperature value, which is higher than said first temperature value, along a third outlet branch (67), which is fluidly connected to said first branch (65);
said second inlet branch (66) and said third outlet branch (67) extending parallel to said first axis (X) and being spaced apart from one another along a second axis (Y) transverse to said first axis (X).

10. The method according to claim 8 or 9, **characterized in that** said step iii) comprises the step vi) of conveying said heat transfer fluid along:
- a first duct (70) of said first branch (65) parallel to said second axis (Y); and
- a second duct (71) parallel to a third axis (Z), which is orthogonal to said first axis (X) and to said second axis (Y).

11. The method according to any one of the claims from 8 to 10, **characterized in that** it comprises the step viii) of having said fluid flow inside said circuit (55), along which a pump (60) and a heat exchanger (65) are arranged.

12. The method according to any one of the claims from 8 to 11, **characterized in that** it comprises the step ix) of wrapping said first layer (46) in an impermeable membrane (47).
